# DEMANDE DE BREVET EUROPEEN

(11) **EP 0 798 240 A1**
(43) Date de publication de la demande: **01.10.1997**
(21) Numéro de dépôt: 97401501.8
(22) Date de dépôt: 26.06.1997
(51) Int. Cl.: B65G 15/50, B65G 47/31

(54) **Dispositif de transport de produits à convoyeurs**

(30) Priorité: 13.11.1996 FR 9613820
(71) Demandeur: XEDA INTERNATIONAL, 13670 Saint-Andiol (FR)
(72) Inventeur: Sardo, Alberto, 13160 - Chateaurenard (FR)
(74) Mandataire: Moncheny, Michel

(57) **Abrégé**

L'invention concerne un dispositif de transport de fruits (P), comportant un premier et un second convoyeurs (10, 12) alignés et comportant chacun deux brins parallèles (14A, 14B ; 16A, 16B). Le dispositif comporte en outre un convoyeur intermédiaire (32) de transfert des produits (P) du premier convoyeur (10) au second convoyeur (12). Le convoyeur intermédiaire comporte un tronçon (35) sensiblement horizontal de transfert des produits dont l'extrémité avant (36) est disposée en amont de l'extrémité de sortie (18) du premier convoyeur (10) et dont l'extrémité arrière (38) est disposée en aval de l'extrémité d'entrée (20) du second convoyeur (12). Le convoyeur intermédiaire (32) est adapté pour assurer un transport des produits (P) conjointement à leur transport par lesdits premier et second convoyeurs (10, 12) sur les tronçons (42, 44) d'intersection des convoyeurs.

## Description

La présente invention concerne un dispositif de transport de produits, tels que des fruits, du type comportant un premier et un second convoyeurs se déplaçant dans le même sens; une extrémité de sortie du premier convoyeur étant espacée d'une extrémité d'entrée du second convoyeur, chaque convoyeur définissant un tronçon de transport des produits reposant sur celui-ci, les tronçons de transport des deux convoyeurs s étendant dans un même plan sensiblement horizontal, le dispositif comportant en outre des moyens de transfert des produits du premier convoyeur au second convoyeur.

De tels dispositifs de transport sont utilisés notamment afin de permettre le transfert de produits d'un premier convoyeur se déplaçant à une première vitesse vers un second convoyeur se déplaçant à une seconde vitesse différente de la première vitesse.

Un tel dispositif est décrit dans la demande de brevet français FR-A-2.612.090 déposée au nom de la Demanderesse. Ce dispositif est décrit notamment en regard des figures 1, 3, 4, 6, 7, 8 et 9 de ce document. Les premier et seconds convoyeurs comportent chacun deux brins refermés en boucle. Les moyens de transfert des produits du premier convoyeur au second convoyeur comportent trois roues montées rotatives autour d'un même axe sensiblement horizontal et disposées perpendiculairement aux premier et second convoyeurs. Ces trois roues sont disposées entre l'extrémité de sortie du premier convoyeur et l'extrémité d'entrée du second convoyeur afin de transférer les produits arrivant sur le premier convoyeur vers le second convoyeur. Les deux roues latérales ont un diamètre identique, supérieur au diamètre de la roue centrale. Les extrémités respectivement de sortie et d'entrée des premier et second convoyeurs sont intercalées entre les roues de transfert de part et d'autre de la roue centrale.

Comme représenté sur la figure 3 de ce document, lors de leur transfert, les produits s'appuient sur la roue centrale de petit diamètre et sur une unique roue latérale de grand diamètre. Aussi, les produits sont déviés latéralement par rapport à leur direction normale de transport imposée par les premier et second convoyeurs lors de leur entrée sur les roues de transfert. Lorsque les produits atteignent l'entrée du second convoyeur, ceux-ci sont à nouveau déviés latéralement afin de reprendre la direction normale de transport.

Ces déplacements latéraux nuisent au transport correct des produits. En particulier, ils peuvent être à l'origine de déplacements relatifs des produits. De plus, dans le cas de fruits, ces déplacements latéraux peuvent causer des dommages.

Par ailleurs, les extrémités des premier et second convoyeurs définissent avec les roues de transfert des creux dans lesquels s'accumulent temporairement les produits en vue notamment de leur retournement comme cela est décrit en regard des figures 6 à 9 de la demande précitée. Ces creux d'accumulation provoquent des décalages entre les produits se succédant sur le convoyeur. De tels décalages interdisent un repérage en position précis des produits sur le convoyeur. De plus, dans certaines circonstances, le retournement des produits n'est pas souhaitable.

L'invention a pour but d'apporter une solution au problème mentionné ci-dessus, et en particulier de permettre le transfert de produits se succédant d'un premier convoyeur à un second convoyeur en conservant la proportionnalité des intervalles de distance séparant les produits.

A cet effet, l'invention a pour objet un dispositif de transport de produits tels que des fruits, du type précité, caractérisé en ce que lesdits moyens de transfert comportent un convoyeur intermédiaire sensiblement horizontal de transfert des produits dont une extrémité amont est disposée en amont de l'extrémité de sortie du premier convoyeur et dont une extrémité aval est disposée en aval de l'extrémité d'entrée du second convoyeur, et en ce que le convoyeur intermédiaire est adapté pour assurer un transport des produits conjointement à leur transport par lesdits premier et second convoyeurs sur les tronçons communs des convoyeurs.

Suivant des modes particuliers de réalisation, le dispositif de transport peut comporter l'une ou plusieurs des caractéristiques suivantes :
- les premier et second convoyeurs comportent chacun deux brins parallèles refermés en boucle, mobiles entre des organes de guidage, et sur lesquels reposent les produits ;
- les brins des premier et second convoyeurs comportent des chaînes à maillons articulés, les organes de guidage des premier et second convoyeurs comportant des roues dentées montées rotatives coopérant avec les maillons des chaînes ;
- le convoyeur intermédiaire comprend trois courroies refermées en boucle, mobiles entre des organes de guidage, et définissent un tronçon de transfert des produits, les deux brins des premier et second convoyeurs étant intercalés à leur extrémité respective de sortie et d'entrée entre les courroies du convoyeur intermédiaire, sur ledit tronçon de transfert, la courroie centrale est disposée au-dessous du niveau des deux courroies latérales et délimite avec celles-ci un canal de support des produits dont la section est adaptée pour un appui sensiblement simultané des produits sur les trois courroies lors de leur transport sur le tronçon de transfert, et, sur lesdits tronçons communs, les deux brins des premier et second convoyeurs sont disposés à un niveau intermédiaire compris entre le niveau de la courroie centrale et le niveau des courroies latérales du convoyeur intermédiaire ;
- les organes de guidage du transporteur intermédiaire comportent des roues montées rotatives autour d'axes s'étendant perpendiculairement aux courroies dudit transporteur intermédiaire ;
- les axes de rotation des roues disposées d'un même côté du tronçon de transfert sont portés par une même droite ; et
- le niveau des deux brins des premier et second convoyeurs est adapté pour un appui sensiblement simultané des produits sur les deux brins des premier et second convoyeurs et sur les trois courroies du convoyeur intermédiaire lors du transport des produits sur les tronçons communs des premier et second convoyeurs avec le convoyeur intermédiaire.

L'invention sera mieux comprise à la lecture de la description qui va suivre, donnée uniquement à titre d'exemple et faite en se référant aux dessins, sur lesquels :
- la figure 1 est une vue partielle de côté d'un dispositif de transport selon l'invention ;
- la figure 2 est une vue de dessus du transporteur de la figure 1 ; et
- la figure 3 est une vue en coupe transversale du convoyeur des figures 1 et 2 prise suivant la ligne III-III.

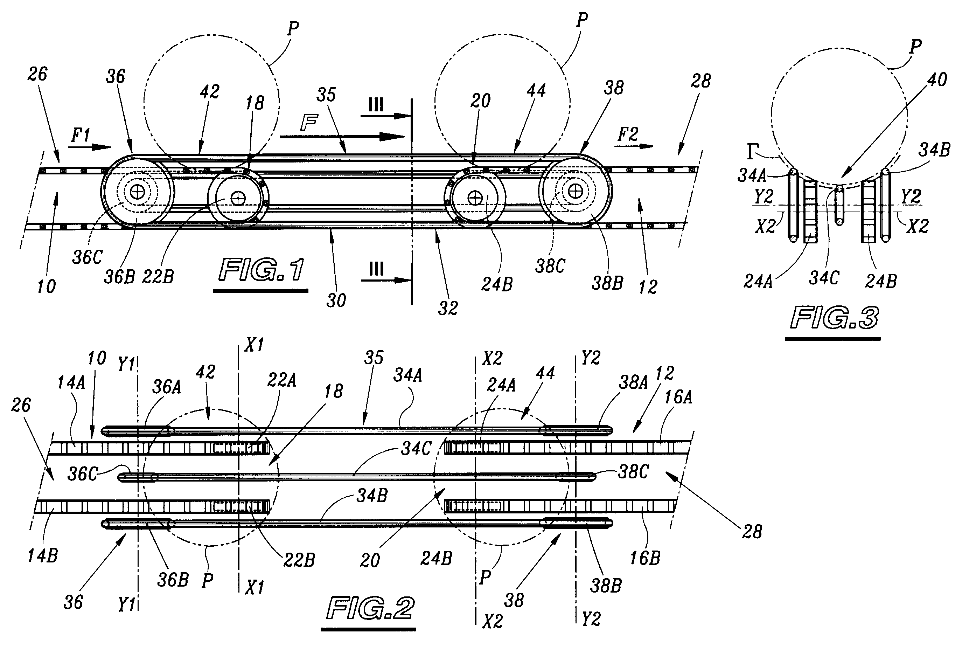

Le dispositif de transport de produits représenté sur la figure 1 est destiné au transport de produits de forme générale sphérique ou ovale, tels que des fruits, notamment des pommes, des poires ou des pamplemousses.

Sur les dessins, les produits sont schématisés par des sphères et désignés par la référence P.

Le dispositif de transport comporte un premier convoyeur 10 et un second convoyeur 12 alignés, séparés l'un de l'autre et se déplaçant dans le même sens suivant le sens des flèches F1 et F2, éventuellement à des vitesses différentes.

Chaque convoyeur comporte, comme représenté sur la figure 2, deux brins parallèles notés 14A, 14B pour le premier convoyeur et 16A, 16B pour le second convoyeur.

Chaque brin est formé par une chaîne à maillons articulés. Il est refermé en boucle et est mobile entre des organes de guidage disposés à chaque extrémité du convoyeur.

Sur les figures 1 et 2, seuls les organes de guidage disposés respectivement à une extrémité 18 de sortie du premier convoyeur et à une extrémité 20 d'entrée du second convoyeur sont représentés. Ces organes de guidage sont formés, dans le mode de réalisation représenté, par des roues dentées portant respectivement les références 22A, 22B pour le premier convoyeur et 24A, 24B pour le second convoyeur.

Les roues dentées associées à une même extrémité sont portées par un même arbre d'axe X1-X1, X2-X2 s'étendant horizontalement et perpendiculairement aux convoyeurs.

Les convoyeurs définissent ainsi chacun un tronçon sensiblement horizontal de transport des produits P reposant sur les deux brins du convoyeur. Ces tronçons portent respectivement pour le premier et le second convoyeurs les références 26 et 28.

Des moyens 30 de transfert des produits sont disposés entre les deux convoyeurs.

Ces moyens de transfert comportent un convoyeur intermédiaire 32 comprenant trois courroies souples 34A, 34B, 34C refermées en boucle, mobiles suivant le sens de la flèche F entre des organes de guidage d'extrémité.

Le convoyeur intermédiaire 32 comporte ainsi un tronçon 35 sensiblement horizontal de transfert des produits du convoyeur 10 au second convoyeur 12. Le tronçon 35 s'étend, pour chaque courroie 34A, 34B, 34C, respectivement, depuis des premiers organes de guidage 36A, 36B, 36C disposés à une extrémité amont 36 jusqu'à des seconds organes de guidage 38A, 38B, 38C disposés à une extrémité aval 38.

Le convoyeur intermédiaire 32 avance à la même vitesse que les premier et second convoyeurs lorsque leurs vitesses sont identiques. Lorsque les premier et second convoyeurs ont des vitesses différentes, la vitesse du convoyeur intermédiaire 32 est comprise entre ces deux vitesses.

Les organes de guidage sont formés par des roues à gorge montées rotatives autour d'un axe horizontal s'étendant perpendiculairement aux premier et second convoyeurs. Les axes de rotation des organes de guidage disposés à une même extrémité du convoyeur intermédiaire sont portés par une même droite notée respectivement Y1-Y1, Y2-Y2 pour l'extrémité amont 36 et l'extrémité aval 38 du convoyeur.

Les premiers organes de guidage 34A, 34B, 34C sont disposés en amont de l'extrémité 18 de sortie du premier convoyeur.

De manière analogue, les seconds organes de guidage 38A, 38B, 38C des courroies sont disposés en aval de l'extrémité 20 d'entrée du second convoyeur.

Les deux brins des premier et second convoyeurs sont intercalés à leur extrémité respective de sortie 18 et d'entrée 20 entre les courroies 34A, 34C, 34B du convoyeur intermédiaire (figure 2).

Comme représenté sur les figures 1 et 3, la courroie centrale 34C est disposée sur le tronçon de transfert 35 au-dessous du niveau commun des deux courroies latérales 34A, 34B. Les trois courroies délimitent ainsi sur le tronçon de transfert 35 un canal 40 de support des produits P ayant une section en V. La section du canal de support est adaptée pour un appui sensiblement simultané des produits P sur les trois courroies 34A, 34B, 34C lors de leur transport sur le tronçon de transfert.

Par ailleurs, sur les tronçons communs 42, 44 des premier et second convoyeurs avec le convoyeur intermédiaire, les deux brins 14A, 14B et 16A, 16B des premier et second convoyeurs sont disposés à un niveau intermédiaire compris entre le niveau de la courroie centrale 34C et le niveau des courroies latérales 34A, 34B du convoyeur intermédiaire.

En particulier, le niveau des deux brins des premier et second convoyeurs est adapté pour un appui sensiblement simultané des produits P sur les deux brins des premier et second convoyeurs et sur les trois courroies du convoyeur intermédiaire lors du transport des produits sur les tronçons communs 42, 44. A cet effet, les trois courroies et les deux brins sont répartis suivant une section transversale du convoyeur sur un arc de cercle noté Γ sur la figure 3.

On comprend que dans ces conditions les produits peuvent transiter du premier convoyeur au convoyeur intermédiaire sans subir de déplacement latéral ou de changement de niveau. En particulier, sur les tronçons communs du premier convoyeur et du convoyeur intermédiaire, les produits P sont guidés et entraînés conjointement par les deux chaînes du premier convoyeur et les trois courroies du convoyeur intermédiaire.

De même, lors du transfert des produits du convoyeur intermédiaire au second convoyeur, les produits sont guidés et entraînés simultanément par les trois courroies du convoyeur et les deux chaînes du second convoyeur.

Dans ces conditions, les intervalles relatifs séparant les produits sont conservés lors du passage d'un convoyeur à l'autre.

De plus, la souplesse des courroies utilisées pour le convoyeur intermédiaire compense les éventuelles irrégularités de taille des produits transportés.

## Revendications

1. Dispositif de transport de produits (P), tels que des fruits, du type comportant un premier et un second convoyeurs (10, 12) se déplaçant dans le même sens, une extrémité (18) de sortie du premier convoyeur (10) étant espacée d'une extrémité (20) d'entrée du second convoyeur (12), chaque convoyeur définissant un tronçon (26, 28) de transport des produits (P) reposant sur celui-ci, les tronçons de transport des deux convoyeurs (10, 12) s'étendant dans un même plan sensiblement horizontal, le dispositif comportant en outre des moyens (30) de transfert des produits (P) du premier convoyeur (10) au second convoyeur (12), caractérisé en ce que lesdits moyens (30) de transfert comportent un convoyeur intermédiaire (32) sensiblement horizontal de transfert des produits (P) dont une extrémité amont (36) est disposée en amont de l'extrémité de sortie (18) du premier convoyeur (10) et dont une extrémité aval (38) est disposée en aval de l'extrémité d'entrée (20) du second convoyeur (12), et en ce que le convoyeur intermédiaire (32) est adapté pour assurer un transport des produits (P) conjointement à leur transport par lesdits premier et second convoyeurs (10, 12) sur les tronçons (42, 44) communs des convoyeurs.

2. Dispositif de transport selon la revendication 1, caractérisé en ce que les premier et second convoyeurs (10, 12) comportent chacun deux brins parallèles (14A, 14B, 16A, 16B) refermés en boucle, mobiles entre des organes de guidage (22A, 22B, 24A, 24B), et sur lesquels reposent les produits (P).

3. Dispositif de transport selon la revendication 2, caractérisé en ce que les brins des premier et second convoyeurs comportent des chaînes à maillons articulés, les organes de guidage des premier et second convoyeurs comportant des roues dentées (22A, 22B, 24A, 24B) montées rotatives coopérant avec les maillons des chaînes.

4. Dispositif de transport selon la revendication 2 ou 3, caractérisé en ce que le convoyeur intermédiaire (32) comprend trois courroies (34A, 34B, 34C) refermées en boucle, mobiles entre des organes de guidage (36A, 36B, 36C, 38A, 38B, 38C), et définissent un tronçon (35) de transfert des produits (P), les deux brins (14A, 14B, 16A, 16B) des premier et second convoyeurs (10, 12) étant intercalés à leur extrémité respective de sortie (18) et d'entrée (20) entre les courroies (34A, 34B, 34C) du convoyeur intermédiaire (32), en ce que, sur ledit tron-çon de transfert (35), la courroie centrale (34C) est disposée au-dessous du niveau des deux courroies latérales (34A, 34B) et délimite avec celles-ci un canal (40) de support des produits dont la section est adaptée pour un appui sensiblement simultané des produits (P) sur les trois courroies (34A, 34B, 34C) lors de leur transport sur le tronçon de transfert (35), et en ce que, sur lesdits tronçons communs (42, 44), les deux brins (14A, 14B, 16A, 16B) des premier et second convoyeurs (10, 12) sont disposés à un niveau intermédiaire compris entre le niveau de la courroie centrale (34C) et le niveau des courroies latérales (34A, 34B) du convoyeur intermédiaire.

5. Dispositif de transport selon la revendication 4, caractérisé en ce que les organes de guidage du transporteur intermédiaire (32) comportent des roues (36A, 36B, 36C, 38A, 38B, 38C) montées rotatives autour d'axes (Y1-Y1, Y2-Y2) s'étendant perpendiculairement aux courroies (34A, 34B, 34C) dudit transporteur intermédiaire (32).

6. Dispositif de transport selon la revendication 5, caractérisé en ce que les axes de rotation (Y1-Y1, Y2-Y2) des roues disposées d'un même côté du tronçon de transfert (35) sont portés par une même droite.

7. Dispositif de transport selon l'une quelconque des revendications 2 à 6, caractérisé en ce que le niveau des deux brins (14A, 14B, 16A, 16B) des premier et second convoyeurs est adapté pour un appui sensiblement simultané des produits sur les deux brins (14A, 14B, 16A, 16B) des premier et second convoyeurs et sur les trois courroies (24A, 24B, 24C) du convoyeur intermédiaire lors du transport des produits (P) sur les tronçons communs (42, 44) des premier et second convoyeurs (10, 12) avec le convoyeur intermédiaire (32).
